# EUROPEAN PATENT APPLICATION

(11) **EP 0 994 431 A2**
(43) Date of publication of application: **19.04.2000**
(21) Application number: 99308052.2
(22) Date of filing: 13.10.1999
(51) Int. Cl.: G06F 17/60

(54) **System and method of managing different types of electronic price labels**

(30) Priority: 15.10.1998 US 173596
(71) Applicant: NCR International, Inc., Dayton, Ohio 45479 (US)
(72) Inventor: Byravabhotla, Raghurama, Duluth, Georgia 30096 (US)
(74) Representative: Williamson, Brian

(57) **Abstract**

An electronic price label (EPL) system which verifies that an EPL supports content of a message before sending the message. The system includes a plurality of EPLs within a plurality of different types of EPLs, and a computer which determines characteristics of the EPLs, obtains content for messages to be sent to the EPLs, verifies that the content is compatible with the characteristics of the EPLs, and sends the messages to the EPLs only if the content is compatible with the characteristics of the EPLs.

## Description

The present invention relates to electronic price label (EPL) systems, and more specifically to a system and method of managing different types of EPLs.

EPL systems typically include a plurality of EPLs for each merchandise item in a transaction establishment. EPLs typically display the price of corresponding merchandise items on transaction establishment shelves and are typically attached to a rail along the leading edge of the shelves. A transaction establishment may contain thousands of EPLs to display the prices of the merchandise items. The EPLs are coupled to a central server from where information about the EPLs is typically maintained in an EPL data file. Price information displayed by the EPLs is obtained from a price look-up (PLU) file.

As EPL systems gain popularity, improvements and new features will be added to EPLs. For example, a typical EPL today has four data registers and an eight-character liquid crystal display sufficient to display prices, unit prices, and promotional messages in limited combinations. Software which controls the EPLs is tailored to these specifications. But if new and different EPLs having increased memory and display capacity are added to an existing installation, the software must be rewritten to communicate with the newer EPLs and the existing EPLs. Thus, it would be costly each time new and different EPLs were added to an existing installation.

It is an object of the present invention to provide an improved system and method of managing different types of EPLs.

From a first aspect, the present invention resides in a method of sending a message to an electronic price label (EPL) among a plurality of EPLs in a transaction establishment comprising the steps of:
determining the characteristics of the EPL;
obtaining content for the message to be sent to the EPL;
verifying that the content is compatible with the characteristics of the EPL; and
sending the message to the EPL only if the content is compatible with the characteristics of the EPL.

The EPL is preferably of a predetermined type among a plurality of different types of EPLs within the transaction establishment.

The message content is preferably obtained by obtaining the information to be displayed by the EPL and to be included in the message. Preferably this occurs in response to operator input by recordal of the information by an input device coupled to a computer. Alternatively, the information may be downloaded from a batch file in response to execution of the batch file by the computer or from another computer remote from the transaction establishment.

In verifying the compatability of the message content, the content is preferably compared with the characteristics of the EPL and an operator is prompted if the content for the message is incompatible with the characteristics of the EPL by, for example, displaying an error message. The message may be scheduled for transmission to the EPL only if all of the information can be displayed by the EPL.

The characteristics of the plurality of EPLs may be stored in a data file from which the characteristics of the EPL to which the message is to be sent is retrieved. The characteristics of the EPL may be displayed to an operator

From a further aspect, the present invention resides in an electronic price label (EPL) system comprising:
a plurality of EPLs within a plurality of different types of EPLs; and
a computer adapted to determine the characteristics of the EPLs, obtain content for messages to be sent to the EPLs, verify that the content is compatible with the characteristics of the EPLs, and to send the messages to the EPLs only if the content is compatible with the characteristics of the EPLs.

There are many advantages to the system and method proposed by the present invention. In particular, different types of EPLs may be managed without requiring the underlying control software to be rewritten each time new and different EPLs are added. This is achieved by EPL applications accessing a data file containing specifications for each EPL before causing EPL control software to communicate with the EPLs.

Embodiments of the present invention will now be described by way of reference to the accompanying drawings, in which:
Fig. 1 is a block diagram of transaction system including an EPL system;
Fig. 2 is a diagram showing data files used within a transaction establishment; and
Fig. 3 is a flow diagram illustrating the method of the present invention.

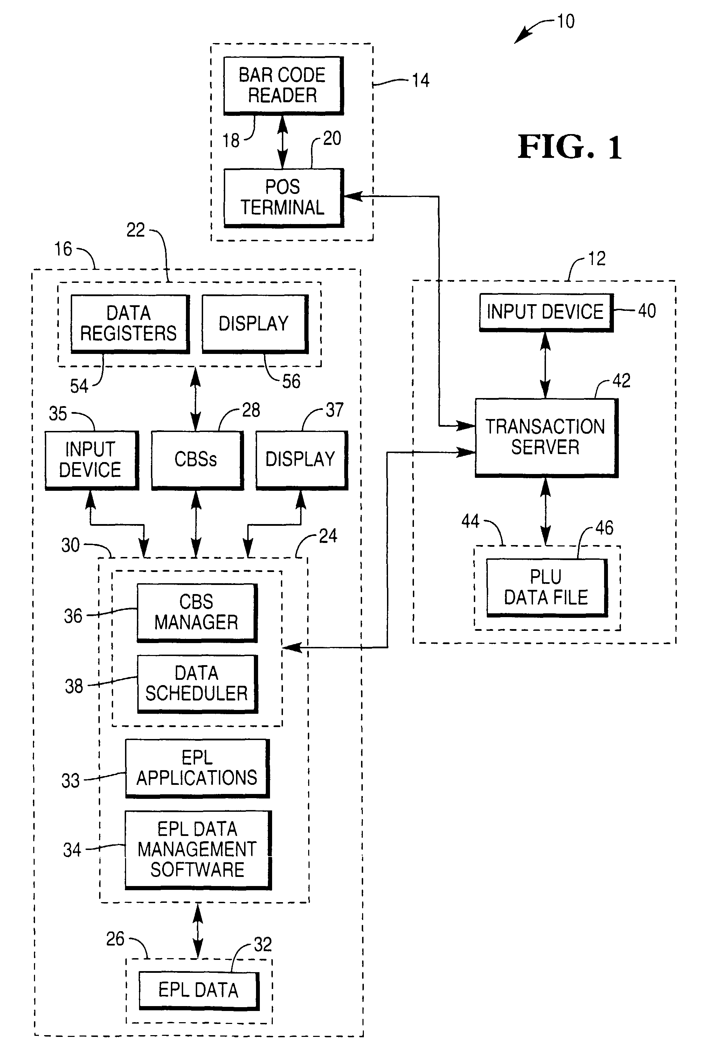

Referring now to Fig. 1, transaction system 10 primarily includes host computer system 12, point-of-sale (POS) system 14, and EPL system 16. Here, components 12 and 14 are shown as separate components that are networked together, but they may also form a single component. Thus, host computer system 12 may be a POS terminal which doubles as a host computer for network of other POS terminals. POS system 14 includes bar code reader 18 and terminal 20.

EPL system 16 primarily includes EPLs 22, host EPL terminal 24, EPL storage medium 26, and communication base stations (CBSs) 28.

EPLs 22 include a data registers 54 and a display 56. Data registers 54 contain data, usually price data and promotional data, sent from EPL control software 30. The data is displayed by displays 56. EPLs 22 include different types of EPLs, including new and different EPLs added following an initial installation of EPL system 16.

Host EPL terminal 24 executes EPL control software 30 which is responsible for scheduling, and transmitting messages to EPLs 22. EPL control software 30 primarily includes data scheduler 38 and CBS manager 36. Data scheduler 38 schedules EPL messages, such as price change messages, to be sent to EPLs 22 through CBSs 28. CBS manager 36 schedules transmission of messages to EPLs 22 and the reception of status messages from EPLs 22 for predetermined time slots. CBS manager 36 also schedules transmission of messages acknowledging the identification of EPLs 22.

Host EPL terminal 24 also executes a number of EPL applications 33 which allows retailers to manage EPL system 16. For example, one of EPL applications 33 may be a price verifier application which looks for mismatches between prices displayed by EPLs 22 and prices in PLU data file 46. Another EPL application 33 may be one which records promotional messages for display by EPLs 22.

The messages to EPLs 22 typically contain price information from price look-up (PLU) data file 46, but the messages may also contain promotional information from a promotional information source file, which may be PLU data file 46. Applications 33 obtain prices from PLU data file 46 as they are entered using input device 40 or after they have been stored within PLU data file 46.

EPL terminal 24 also executes EPL data management software 34 which allows an operator to add, delete, and change EPL data 32 using input device 35. EPL data 32 includes detailed characteristics of EPLs 22. Under the present invention, applications 33 and optionally EPL control software 30 access EPL data 32 before formulating messages for transmission.

To assist with execution of certain tasks performed by EPL control software 30, EPL terminal 24 includes a built-in time keeping device, commonly referred to as a system clock, which is synchronized with current time, in order to automatically execute the tasks at their scheduled times.

EPL storage medium 26 stores EPL data 32. EPL storage medium 26 is preferably a fixed disk drive.

CBSs 28 preferably include control circuitry and antennae for transmitting and receiving messages between CBSs 28 and EPLs 22. EPL system 16 preferably includes a plurality of CBSs 28 connected together in series.

Host computer system 12 includes PLU storage medium 44, transaction server 42, and input device 40.

Transaction server 42 handles price requests from POS terminal 20 and EPL system 16. POS terminal 20 sends item identification information to transaction server 42 and transaction server 42 returns the corresponding price from PLU data file 46. EPL system 16 obtains prices from PLU data file 46 and may additionally obtain promotional data from PLU data file 46 or some other source.

PLU storage medium 44 stores PLU data file 46. PLU data file 46 is available for distribution to POS terminal 20 and EPL system 16. Provision may be made for direct access to PLU data file 46 by bar code reader 18 or EPL terminal 24.

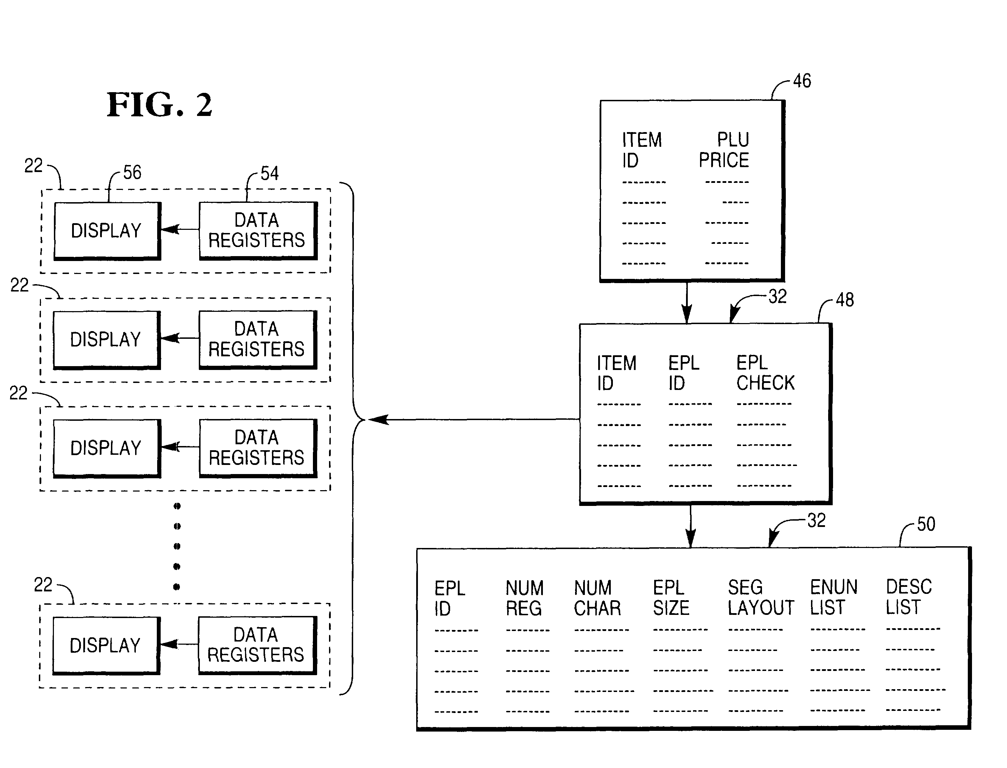

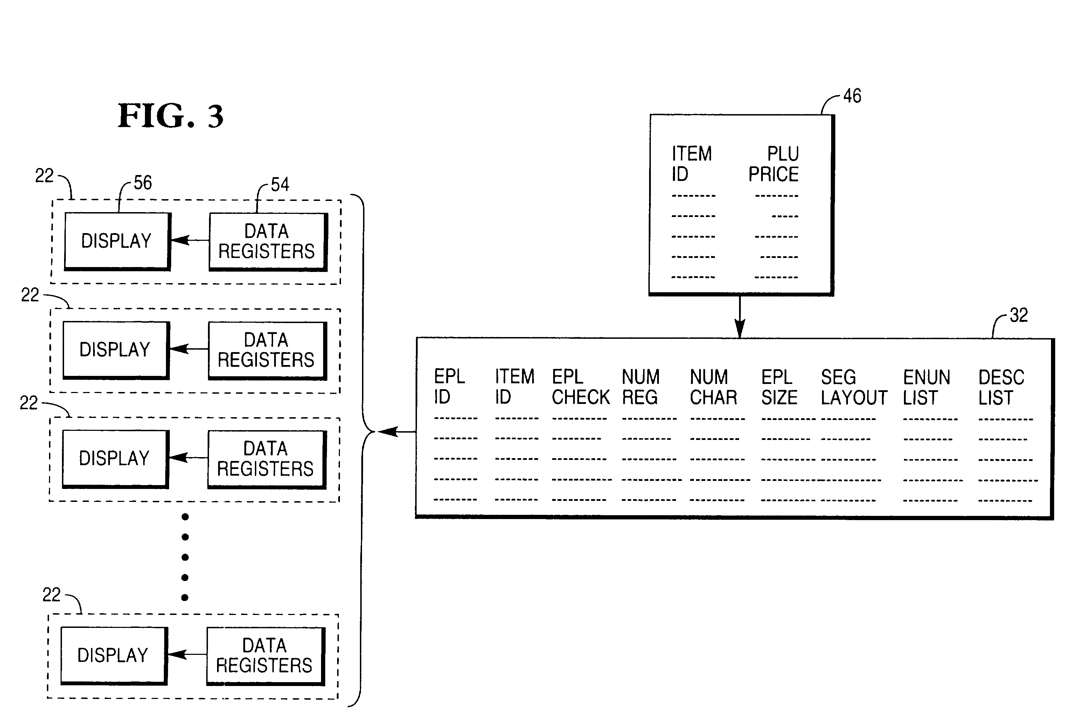

Turning now to Figs. 2 and 3, EPL data 32 and PLU data file 46 are shown in more detail. With reference to Fig. 2, EPL data 32 are stored in two files, EPL assignment file 48 and EPL characteristics file 50.

EPL assignment file 48 contains assignments of EPLs 22 to merchandise items and may additionally contain price checksum information for price verification.

EPL characteristics file 50 contains detailed information for each of EPLs 22. This detailed information is used by EPL applications 33 in tailoring messages to EPLs 22.

In more detail, EPL assignment file 48 includes a line entry for each EPL 22 in EPL system 16. Each line entry has an item identification entry (ITEM ID), an EPL identification entry (EPL ID), and an EPL checksum value entry (EPL CHECK).

Entry ITEM ID identifies a merchandise item. Entry EPL ID identifies which EPL is assigned to the item. Entry EPL CHECK is a checksum value of the price information or promotional information within data registers 54.

One checksum entry may be employed for EPLs that can only display either price or promotional data. Alternatively, two checksum entries, one for price and one for promotional data, may be employed, particularly for EPLs capable of displaying prices and promotional data simultaneously. Another alternative is to maintain separate checksums for each data register 54, in addition to a price checksum.

In more detail, EPL characteristics file 50 includes a line entry for each EPL 22 in EPL system 16. Each line entry has an EPL identification entry (EPL ID) and additional entries as necessary to ensure correct information is displayed by EPLs 22. Example entries are shown in Fig. 2, but additional entries are envisioned as necessary to ensure that features of EPLs 22 are fully available for used by operators. Any detail required to describe EPLs 22 is stored and made available to applications 33 and EPL control software 30.

Entry NUM REG identifies the number of data registers 54. Typical EPLs contain four registers. New EPLs are likely to include more registers. EPL control software 30 and some of applications 33 must know the number of data registers 54 in order to properly limit the amount of information they command EPLs 22 to store and/or display.

Entry NUM CHAR identifies the number of characters supported by each data register 54. Typical EPLs have four registers which together support eight characters. Thus, entry NUM CHAR is typically a value of'2'. New EPLs may contain a different memory architecture requiring fewer data registers 54. EPL control software 30 and some of applications 33 must know the number of characters per data register 54 in order to properly limit the number of characters they command EPLs 22 to display at a single time.

Entry EPL SIZE identifies the size of the EPL. Typical shelf-mounted EPLs are of two sizes. One size is shorter in width than the other and is assigned to items occupying a shelf width which is too small to accommodate the wider EPLs. EPLs intended for mounting on end aisles or other special produce areas may be larger than shelf mounted EPLs. EPL control software 30 and some of applications 33 must know EPL size in order to verify that EPLs are mounted in correct locations.

Entry SEG LAYOUT identifies the layout of character segments of each EPL. Typical displays 56 have seven-segment characters. Each segment is identified by a predetermined identifier. The identifiers for existing displays 56 may be different than the identifiers for new displays. EPL control software 30 and some of applications 33 must know the segment layout in order to properly display information.

Entry ENUN LIST identifies punctuation characters, such as a period and a comma, that are displayed at specific locations by display 56.

Entry DESC LIST identifies symbols, such as the triangle, square, center BAR, forward slash that may be displayed.

EPL characteristics file 50 may additionally include entries for each displayed character and the corresponding display segments which must be turned on in order to display each character. Characters in the list which are not supported by a particular type of EPL may be identified by a special mark which indicates to EPL control software 30 and applications 33 that such characters are unavailable for use in connection with that type of EPL.

PLU data file 46 includes a line entry for each item sold in the transaction establishment. Each line entry has at least an item identification entry (ITEM ID) and a PLU price entry (PLU PRICE).

Entry ITEM ID identifies a store item. Entry PLU PRICE identifies the price read by POS system 14 to determine the price of each item during scanning by bar code reader 18.

With reference to Fig. 3, the contents of EPL assignment file 48 and EPL characteristics file 50 are managed in a single file 32.

During normal operation, EPL data management software 34 records EPL characteristics upon operator input and stores the EPL characteristics in one or more files as EPL data 32. As new EPLs 22 are added to EPL system 16, their characteristics are recorded.

EPL control software 30 and applications 33 read EPL data 32 for the EPL characters when processing and formulating messages to EPLs 22. Some of applications 33 read EPL data 32 and automatically formulate messages based upon EPL data 32. Some of applications 33 read EPL data 32 and display the characteristics of EPLs 22 to an operator using display 37 so that the operator can tailor messages to individual EPLs 22.

Advantageously, EPL control software 30 and applications 33 do not process and formulate messages that exceed the capabilities of any given EPL. At the same time, EPL control software 30 and applications 33 can take full advantage of new EPL features, rather than create all messages to the lowest common EPL capability.

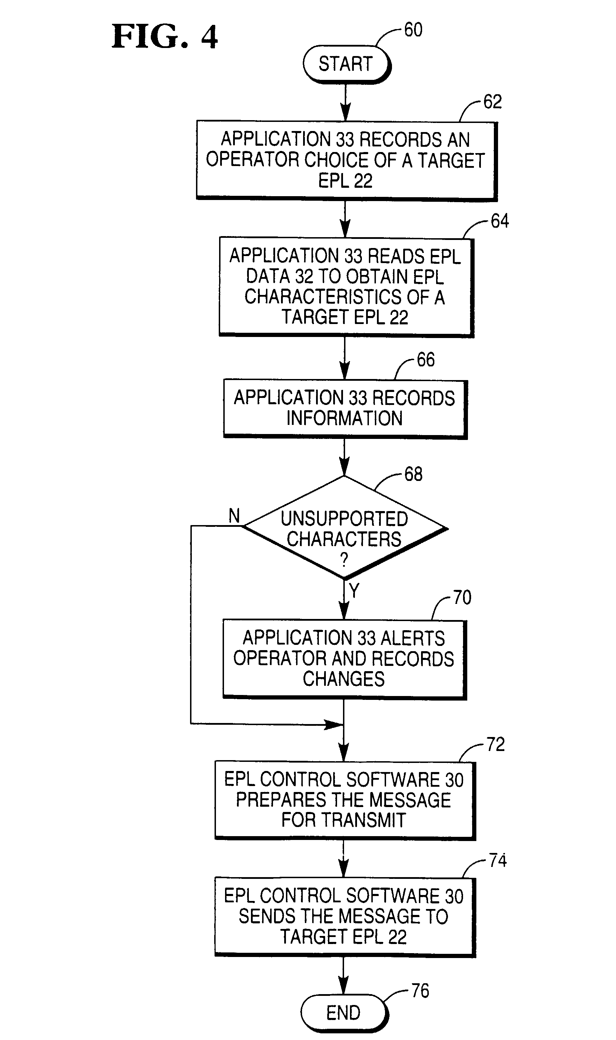

Turning now to Fig. 4, a method of sending a message to an EPL under the method of the present invention is illustrated in detail beginning with START 60.

Steps 62-70 relate to use of EPL data 32 in formulating a message to a target EPL 22.

In step 62, application 33 records an operator choice of a target EPL 22 to which application 33 must send a message.

In step 64, application 33 reads EPL data 32 to obtain EPL characteristics of the target EPL 22. EPL data management software 34 has previously recorded the EPL characteristics and stored them as part of EPL data 32. As new EPLs 22 are added to EPL system 16, the operator inputs their characteristics.

In addition, some of applications 33 automatically formulate messages based upon EPL data 32. Some of applications 33 display the characteristics of EPLs 22 to an operator using display 37 so that the operator can tailor messages to individual EPLs 22.

In step 66, application 33 records information to be displayed in response to operator input. For example, if application 33 is a promotional information application, application 33 records promotional information to be displayed by the target EPL. Application 33 automatically adds an instruction to the target EPL to display the promotional information to the message.

In step 68, application 33 determines whether the recorded information to be displayed contains characters which are not supported by the target EPL. If so, operation proceeds to step 70. If not, operation proceeds to step 72.

In step 70, application 33 alerts the operator and records operator changes to the information to be displayed in response to operator input.

In step 72, EPL control software 30 prepares the message for transmission and may additionally read EPL data file 32 and examine the message for improper characters. EPL control software 30 may then prompt an operator before scheduling the message for transmission.

In step 74, EPL control software 30 sends the message to target EPL 22.

In step 76, the method ends.

Advantageously, under the method of the present invention, applications 33 need not be customized to handle all the different types of EPLs within a transaction establishment. EPL control software 30 handles compatible issues between applications 33 and EPLs 22.

Although the present invention has been described with particular reference to certain preferred embodiments thereof, variations and modifications of the present invention can be effected within the spirit and scope of the following claims.

## Claims

1. A method of sending a message to an electronic price label (EPL) among a plurality of EPLs in a transaction establishment comprising the steps of:
determining the characteristics of the EPL;
obtaining content for the message to be sent to the EPL;
verifying that the content is compatible with the characteristics of the EPL; and
sending the message to the EPL only if the content is compatible with the characteristics of the EPL.

2. A method according to claim 1, wherein the EPL is of a predetermined type among a plurality of different types of EPLs within the transaction establishment.

3. A method according to claims 1 or 2, wherein the step of obtaining content for the message to be sent to the EPL comprises obtaining the information to be displayed by the EPL and to be included in the message.

4. A method according to claims 1 to 3, wherein the step of verifying comprises the substeps of:
comparing the content for the message to the characteristics of the EPL; and
prompting an operator if the content for the message is incompatible with the characteristics of the EPL.

5. A method according to claim 4, wherein the step of verifying further comprises the step of
scheduling the message for transmission to the EPL only if all of the information can be displayed by the EPL.

6. The method according to claim 4, wherein the step of prompting the operator comprises the substep of:
displaying an error message to the operator.

7. A method according to claims 1 to 6, wherein the step of determining the characteristics of the EPL comprises the substeps of:
storing the characteristics of the plurality of EPLs in a data file; and
retrieving characteristics of the EPL to which the message is to be sent from the data file.

8. A method according to claim 3, wherein the information to be displayed by the EPL and to be included in the message is obtained in response to operator input.

9. A method according to claim 8, wherein the information to be displayed by the EPL and included in the message is recorded by an input device coupled to a computer in response to operator input.

10. A method according to claim 9 wherein the information is recorded from a batch file in response to execution of the batch file by the computer.

11. A method according to claim 10, wherein the information to be displayed by the EPL and included in the message is recorded to the computer from another computer remote from the transaction establishment.

12. A method according to any preceding claim, wherein the step of determining the characteristics of the EPL further comprises the step of displaying the characteristics of the EPL to an operator.

13. An electronic price label (EPL) system comprising:
a plurality of EPLs within a plurality of different types of EPLs; and
a computer adapted to determine the characteristics of the EPLs, obtain content for messages to be sent to the EPLs, verify that the content is compatible with the characteristics of the EPLs, and to send the messages to the EPLs only if the content is compatible with the characteristics of the EPLs.
